(19) Europäisches Patentamt European Patent Office Office européen des brevets

(11) **EP 4 106 244 B1**

(12) **EUROPEAN PATENT SPECIFICATION**

(45) Date of publication and mention of the grant of the patent:
**17.06.2026 Bulletin 2026/25**

(21) Application number: **20918781.4**

(22) Date of filing: **14.02.2020**

(51) International Patent Classification (IPC):
**H04L 5/00** *(2006.01)* **H04L 1/1829** *(2023.01)*

(52) Cooperative Patent Classification (CPC):
**H04L 5/0055; H04L 1/1822; H04L 1/1854; H04L 1/1861; H04W 76/14**

(86) International application number:
**PCT/CN2020/075439**

(87) International publication number:
**WO 2021/159539 (19.08.2021 Gazette 2021/33)**

(54) **CHANNEL RECEPTION OPPORTUNITY DETERMINATION METHOD AND COMMUNICATION APPARATUS**

VERFAHREN ZUR BESTIMMUNG VON KANALEMPFANGSGELEGENHEITEN UND KOMMUNIKATIONSVORRICHTUNG

PROCÉDÉ DE DÉTERMINATION D'OPPORTUNITÉ DE RÉCEPTION DE CANAL ET APPAREIL DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.12.2022 Bulletin 2022/51**

(73) Proprietor: **Huawei Technologies Co., Ltd.**
**Shenzhen, Guangdong 518129, (CN)**

(72) Inventors:
- **YANG, Fan**
  **Shenzhen, Guangdong 518129 (CN)**
- **LI, Chao**
  **Shenzhen, Guangdong 518129 (CN)**
- **HUANG, Haining**
  **Shenzhen, Guangdong 518129 (CN)**
- **LIU, Zhe**
  **Shenzhen, Guangdong 518129 (CN)**

(74) Representative: **Roth, Sebastian**
**Mitscherlich PartmbB**
**Karlstraße 7**
**80333 München (DE)**

(56) References cited:
**CN-A- 109 792 594 CN-A- 110 545 533**
**CN-A- 110 545 533**

- **NTT DOCOMO ET AL: "Sidelink resource allocation mechanism mode 1 for NR V2X", vol. RAN WG1, no. Reno, US; 20191118 - 20191122, 9 November 2019 (2019-11-09), XP051823661, Retrieved from the Internet <URL:https://ftp.3gpp.org/tsg_ran/WG1_RL1/TSGR1_99/Docs/R1-1912881.zip R1-1912881_DCM_SL RA mode 1_fin.docx> [retrieved on 20191109]**
- **ERICSSON: "Feature lead summary#3 on Resource allocation for NR sidelink Mode 1", vol. RAN WG1, no. Chongqing, China; 20191014 - 20191020, 22 October 2019 (2019-10-22), XP051798955, Retrieved from the Internet <URL:https://ftp.3gpp.org/tsg_ran/WG1_RL1/TSGR1_98b/Docs/R1-1911713.zip R1-1911713 - Feature lead summary on Resource allocation for NR sidelink Mode 1 v3.docx> [retrieved on 20191022]**

- XIAOMI COMMUNICATIONS: "On HARQ operation for 5G V2x communications", 3GPP DRAFT; R1-1906574, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20190513 - 20190517, 13 May 2019 (2019-05-13), Mobile Competence Centre ; 650, route des Lucioles ; F-06921 Sophia-Antipolis Cedex ; France, XP051728025

- SHARP: "Resource allocation mode 1 for NR sidelink", 3GPP DRAFT; R1-1912758, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20191118 - 20191122, 9 November 2019 (2019-11-09), Mobile Competence Centre ; 650, route des Lucioles ; F-06921 Sophia-Antipolis Cedex ; France, XP051823576

**Description**

**TECHNICAL FIELD**

The present invention relates to the field of communication technologies, and in particular, to a method for determining a channel reception occasion and a communication apparatus.

**BACKGROUND**

In a 5th generation mobile communication system (the 5th generation, 5G), for physical downlink shared channel (physical downlink shared channel, PDSCH) and semi-persistent (SPS) PDSCH releases, a terminal device needs to feed back hybrid automatic repeat request-acknowledgement (hybrid automatic repeat request acknowledgement, HARQ-ACK) information, to notify a network device (for example, an access network device) whether the corresponding PDSCH and SPS PDSCH releases are correctly received and parsed out. The HARQ-ACK information includes an acknowledgement (acknowledgement, ACK) and a negative acknowledgement (negative acknowledgement, NACK). When receiving ACK information sent by the terminal device, the network device determines that receiving and parsing performed by the terminal device are correct. When receiving NACK information sent by the terminal device, the network device determines that parsing performed by the terminal device is incorrect or a CRC check fails, and the network device resends the PDSCH or SPS PDSCH release.

To improve utilization efficiency of uplink resources, HARQ-ACK information for a plurality of PDSCH and SPS PDSCH releases may be fed back on a same uplink resource, and form an HARQ-ACK codebook (codebook). NR supports a semi-static (semi-static) HARQ-ACK codebook. The semi-static HARQ-ACK codebook is simply understood as an HARQ-ACK codebook with a fixed quantity of bits. For the semi-static HARQ-ACK codebook, in each reception occasion of a PDSCH or SPS PDSCH release, regardless of whether the terminal device receives the PDSCH or SPS PDSCH release in the reception occasion, the terminal device needs to feed back the HARQ-ACK information. If the terminal device receives the PDSCH or SPS PDSCH release in a reception occasion of the PSDCH or SPS PDSCH release, the terminal device feeds back the ACK information; otherwise, the terminal device does not receive the PSDCH or SPS PDSCH release and feeds back the NACK information.

In a vehicle to everything (vehicle to everything, V2X) system, communication between vehicles may be performed on a sidelink (sidelink, SL), and the network device may control communication of the terminal device on the sidelink by using a downlink. In mode 1 (model), resources on the sidelink are allocated by the network device. A sending terminal device (sending UE) may send a scheduling request to the network device, to request the resources on the sidelink. In addition, a similar HARQ feedback mechanism is used for communication between terminal devices by using a sidelink, to determine whether a physical sidelink shared channel (physical sidelink shared channel, PSSCH) is successfully sent. If a receiving terminal device (receiving UE) does not receive data or a CRC check on data fails, the receiving UE feeds back the NACK information; otherwise, the receiving UE sends the ACK information. The HARQ-ACK information of the sidelink is sent through a physical sidelink feedback channel (physical side link feedback channel, PSFCH). If the sending terminal device works in mode 1, after receiving the PSFCH in a PSFCH reception occasion, the sending terminal device generates an HARQ-ACK codebook based on content in the PSFCH, and feeds back the HARQ-ACK codebook to the network device. After receiving the HARQ-ACK codebook, the network device learns whether the sending terminal device needs to perform retransmission. However, how the sending terminal device accurately determines the PSFCH reception occasion is an urgent problem to be resolved currently. NTT DOCOMO ET AL, "Sidelink resource allocation mechanism mode 1 for NR V2X", vol. RAN WG1, no. Reno, US; 20191118 - 20191122, (20191109), 3GPP DRAFT; R1-1912881, discusses PSFCH processing time and proposes that the gap between PSFCH corresponding to the scheduling PUCCH conveying the corresponding HARQ-ACK is not smaller than the PSFCH processing time. ERICSSON, "Feature lead summary#3 on Resource allocation for NR sidelink Mode 1", vol. RAN WG1, no. Chongqing, China; 20191014 - 20191020, (20191022), 3GPP DRAFT; R1-1911713, discusses resource allocation of NR sidelink mode 1.

**SUMMARY**

This application provides a method for determining a channel reception occasion and a communication apparatus, to help accurately determine a PSFCH reception occasion. The application is set out in the appended set of claims.

According to a first aspect, this application provides a method for determining a channel reception occasion performed by a terminal device, or a chip in a terminal device. The method includes: determining a first time domain resource offset value set, where the first time domain resource offset value set includes a plurality of slot offset values between a physical sidelink feedback channel PSFCH and a physical uplink control channel PUCCH, wherein the PSFCH carries acknowledgement information to feedback a successful or failed reception of a sidelink transmission, and the acknowledgement information is forwarded in the PUCCH to a network device; and determining at least one PSFCH reception occasion based on the first time domain resource offset value set and a feedback period of the PSFCH. Based on the method described in the first aspect, the PSFCH reception occasion can be accurately determined based on the feedback period of the PSFCH.

In a possible implementation, a specific implementation of determining the PSFCH reception occasion based on the first time domain resource offset value set and the feedback period of the PSFCH is: determining at least one time domain resource as a time domain resource in the at least one PSFCH reception occasion, wherein the at least one time domain resource is in a time domain resource set corresponding to the first time domain resource offset value set, and satisfies the feedback period of the PSFCH, and is for sidelink transmission.

In a possible implementation, a hybrid automatic repeat request-acknowledgement HARQ-ACK codebook may be further generated based on the PSFCH reception occasion, where a size of the HARQ-ACK codebook is related to a quantity of the at least one PSFCH reception occasions. The HARQ-ACK information of each PSSCH can be successfully fed back by using the HARQ-ACK codebook generated based on this possible implementation.

In a possible implementation, the time domain resource set corresponding to the first time domain resource offset value set is a set obtained by subtracting each slot offset value in the first time domain resource offset value set from a PUCCH slot n.

In a possible implementation, the determining a first time domain resource offset value set comprises: determining the first time domain resource offset value set based on a configuration of the network device.

In a possible implementation, a quantity of bits of the HARQ-ACK information that needs to be fed back in each PSFCH reception occasion is related to one or more of the following parameters: a quantity of subchannels in a resource pool for sidelink transmission, the feedback period of the PSFCH, and a quantity of bits of HARQ-ACK information that needs to be fed back through each physical sidelink shared channel PSSCH. In this possible implementation, the quantity of bits of the HARQ-ACK information that needs to be fed back in each PSFCH reception occasion is determined, so that the HARQ-ACK information of each PSSCH can be successfully fed back by using the HARQ-ACK codebook.

According to a second aspect, a communication apparatus is provided. The apparatus may be a terminal device, may be an apparatus in a terminal device, or may be an apparatus that can be used in cooperation with a terminal device. The communication apparatus may alternatively be a chip system. The communication apparatus may perform the method according to the first aspect. Functions of the communication apparatus may be implemented by hardware, or may be implemented by hardware by executing corresponding software. The hardware or the software includes one or more units corresponding to the foregoing functions. The unit may be software and/or hardware. For operations performed by the communication apparatus and beneficial effects, refer to the method in the first aspect and the beneficial effects. Repeated descriptions are not provided.

According to a third aspect, an embodiment of this application provides a computer-readable storage medium. The computer-readable storage medium is configured to store instructions, and when the instructions are executed, the method according to the first aspect is implemented.

According to a fourth aspect, an embodiment of this application provides a computer program product including instructions. When the instructions are executed, the method according to the first aspect is implemented.

**BRIEF DESCRIPTION OF DRAWINGS**

FIG. 1 is a schematic diagram of a communication system according to an embodiment of this application;
FIG. 2 is a schematic diagram of a procedure of determining a channel reception occasion according to an embodiment of this application;
FIG. 3 is a schematic diagram of a time domain resource index offset according to an embodiment of this application;
FIG. 4 is a schematic diagram of a procedure of determining a channel reception occasion according to an embodiment of this application;
FIG. 5 is a schematic diagram of a PSFCH reception occasion according to an embodiment of this application;
FIG. 6 is a schematic diagram of another PSFCH reception occasion according to an embodiment of this application;
FIG. 7 is a schematic diagram of sending a CG PSSCH according to an embodiment of this application;
FIG. 8 is a schematic structural diagram of a communication apparatus according to an embodiment of this application;
FIG. 9a is a schematic structural diagram of another communication apparatus according to an embodiment of this application; and
FIG. 9b is a schematic structural diagram of still another communication apparatus according to an embodiment of this application.

## DESCRIPTION OF EMBODIMENTS

The following further describes specific embodiments of this application in detail with reference to the accompanying drawings.

To make the objectives, technical solutions, and advantages of this application clearer, the following further describes this application in detail with reference to the accompanying drawings.

In the specification, claims, and accompanying drawings of this application, the terms "first", "second", and the like are intended to distinguish between different objects but do not indicate a particular order. In addition, the terms "including", "having", or any other variant thereof, are intended to cover non-exclusive inclusion. For example, a process, method, system, product, or device that includes a series of steps or units is not limited to the listed steps or units, but optionally further includes an unlisted step or unit, or optionally further includes another inherent step or unit of the process, method, product, or device.

Mentioning an "embodiment" in the specification means that a particular characteristic, structure, or feature described with reference to the embodiment may be included in at least one embodiment of this application. The phrase shown in various positions in the specification may not necessarily refer to a same embodiment, and is not an independent or alternative embodiment exclusive with another embodiment. It is explicitly and implicitly understood by a person skilled in the art that an embodiment described in the specification may be combined with another embodiment.

In this application, "at least one (item)" means one or more, "a plurality of" means two or more, "at least two (item)" means two or three and more, and "and/or" is used to describe a correspondence between corresponding objects, represents that three relationships may exist. For example, "A and/or B" may represent the following three cases: Only A exists, only B exists, and both A and B exist. A and B may be singular or plural. The character "/" generally indicates an "or" relationship between the corresponding objects. "At least one of the following items (pieces)" or a similar expression indicates any combination of these items, including a single item (piece) or any combination of a plurality of items (pieces). For example, at least one of a, b, or c may indicate a, b, c, "a and b", "a and c", "b and c", or "a, b, and c", where a, b, and c may be singular or plural.

To better understand the embodiments of this application, the following first describes a system architecture in the embodiments of this application.

The method provided in the embodiments of this application may be applied to various communication systems, for example, an internet of things (internet of things, IoT) system, a narrowband internet of things (narrow band internet of things, NB-IoT) system, a long term evolution (long term evolution, LTE) system, or a 5th generation (5th-generation, 5G) communication system, or may be a hybrid architecture of LTE and 5G, a 5G new radio (new radio, NR) system, a new communication system emerging in future communication development, or the like.

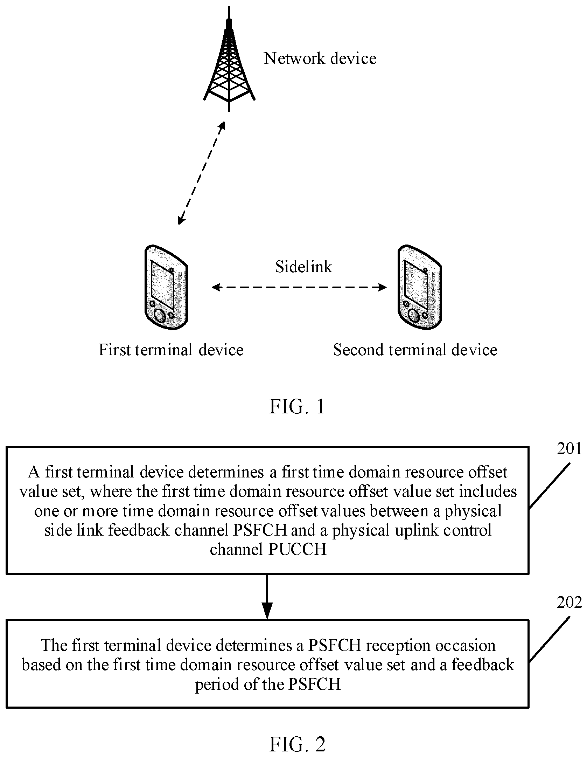

FIG. 1 is a schematic architectural diagram of a communication system according to the embodiments of this application. The solutions in this application are applicable to the communication system. The communication system may include a network device, a first terminal device, and a second terminal device. In FIG. 1, an example in which the communication system includes one network device, one first terminal device, and one second terminal device is used. Certainly, there may alternatively be a plurality of network devices, first terminal devices, and second terminal devices. Optionally, the communication system may be a vehicle to everything (vehicle to everything, V2X) system, or may be another communication system.

The network device in the embodiments of this application is an entity configured to transmit or receive a signal on a network side, and may be configured to perform conversion between a received over-the-air frame and a network protocol (internet protocol, IP) packet and serve as a router between a terminal device and a remaining part of an access network. The remaining part of the access network may include an IP network or the like. The network device may further coordinate attribute management of an air interface. For example, the network device may be an evolved NodeB (evolutional Node B, eNB or e-NodeB) in LTE, a new radio controller (new radio controller, NR controller), a gNodeB (gNB) in a 5G system, a centralized network element (centralized unit), a new radio base station, a radio remote module, a micro base station, a relay (relay), a distributed unit (distributed unit), a transmission reception point (transmission reception point, TRP), a transmission point (transmission point, TP), or any other radio access device. However, the embodiments of this application are not limited thereto.

The terminal device in the embodiments of this application is an entity that is on a user side and that is configured to receive or transmit a signal. The terminal device may be a device that provides a user with voice and/or data connectivity, for example, a handheld device or a vehicle-mounted device having a wireless connection function. The terminal device may alternatively be another processing device connected to a wireless modem. The terminal device may communicate with a radio access network (radio access network, RAN). The terminal device may also be referred to as a wireless terminal, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), a user device (user device), user equipment (user equipment, UE), or the like. The terminal device may be a mobile terminal, for example, a mobile phone (or referred to as a "cellular" phone), and a computer that has a mobile terminal. For example, the terminal device may be a portable, pocket-size, handheld, computer built-in, or vehicle-mounted mobile apparatus, which exchanges voice and/or data with the radio access network. For example, the terminal device may alternatively be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). Common terminal devices include, for example, a mobile phone, a tablet computer, a notebook computer, a palmtop computer, a mobile internet device (mobile internet device, MID), a vehicle, a roadside device, an aircraft, and a wearable device such as a smartwatch, a smart band, and a pedometer. However, the embodiments of this application are not limited thereto. The following describes in detail communication methods and the related devices that are provided in this application.

The first terminal device and the second terminal device may communicate with each other by using a sidelink (sidelink, SL). The first terminal device may be a transmit end of sidelink transmission, and the second terminal device may be a receive end of sidelink transmission. The first terminal device may send a physical sidelink shared channel (physical sidelink shared channel, PSSCH) to the second terminal device by using a sidelink, where. After receiving each PSSCH, the second terminal device feeds back one PSFCH to the first terminal device. The PSFCH carries HARQ-ACK information, used to indicate whether the terminal device correctly parses the PSSCH or whether a CRC check on the PSSCH succeeds.

Generally, sidelink resources can be allocated in the following modes:

Mode 1 (Mode 1): The network device schedules a sidelink resource to the terminal device for sidelink transmission.
Mode 2 (Mode 2): The terminal device determines, in a resource pool, a resource for link transmission performed by the terminal device.

In the mode 1, the sidelink resources are all allocated by the network device. Therefore, after receiving a PSFCH in a PSFCH reception occasion, the first terminal device needs to feed back, to the network device, an HARQ-ACK codebook generated based on content in the PSFCH. The PSFCH reception occasion includes a time domain resource and a frequency domain resource for detecting the PSFCH by the first terminal device. After receiving the HARQ-ACK codebook, the network device learns whether to reallocate a sidelink resource to the first terminal device. However, how the first terminal device determines the PSFCH reception occasion is an urgent problem to be resolved currently.

The embodiments of this application provide a method for determining a channel reception occasion and a communication apparatus, to help accurately determine the PSFCH reception occasion. The following further describes in detail the method for determining a channel reception occasion provided in the embodiments of this application.

FIG. 2 is a schematic flowchart of a method for determining a channel reception occasion according to an embodiment of this application. As shown in FIG. 2, the method for determining a channel reception occasion includes the following step 201 and step 202. The method shown in FIG. 2 may be performed by a first terminal device, or may be performed by a chip in a first terminal device. In FIG. 2, an example in which the method is performed by the first terminal device is used for description. An execution body of the method for determining a channel reception occasion shown in another accompanying drawing in the embodiments of this application is also the first terminal device, and details are not described below again.

201: The first terminal device determines a first time domain resource offset value set, where the first time domain resource offset value set includes one or more time domain resource offset values between a physical sidelink feedback channel PSFCH and a physical uplink control channel PUCCH.

In this embodiment of this application, the time domain resource offset value included in the first time domain resource offset value set is a carrier time domain resource offset value between the PSFCH and the PUCCH. A carrier time domain resource is a time domain resource on a carrier, and the carrier time domain resource may also be referred to as a physical time domain resource in a system frame. The carrier time domain resource may be used for communication between a network device and a terminal device, or may be used for communication between terminal devices. The carrier time domain resource offset value may be a carrier slot offset value, a carrier symbol offset value, or the like.

For example, if the first time domain resource offset value set is {1, 2, 3, 4, 5, 6, 7, 8}, it indicates that there are eight carrier time domain resource offset values between the PSFCH and the PUCCH. Assuming that the carrier time domain resource offset value in the first time domain resource offset value set is a carrier slot offset value, and a carrier slot of the PUCCH is a slot n, a carrier slot set (that is, a carrier slot set of the PSFCH) corresponding to the first time domain resource offset value set is {n-8, n-7, n-6, n-5, n-4, n-3, n-2, n-1}.

In a possible implementation, a specific implementation of determining, by the first terminal device, the first time domain resource offset value set is: determining the first time domain resource offset value set based on a configured uplink-downlink configuration or based on a downlink control information (downlink control information, DCI) format configured to be monitored. The uplink-downlink configuration is an uplink-downlink time domain resource configuration of a Uu link (that is, a communication link between the terminal device and the network device). The uplink-downlink configuration may also be referred to as a time division duplex (time division duplexing, TDD) uplink-downlink configuration.

In this possible implementation, the network device may configure a group of time domain resource offset value sets between the PSFCH and the PUCCH for the first terminal device, or may predefine, in a protocol, a group of time domain resource offset value sets between the PSFCH and the PUCCH on the first terminal device. When configuring the time domain resource offset value set between the PSFCH and the PUCCH, the network device may perform configuration by using radio resource control (radio resource control, RRC) signaling. The first terminal device may specifically determine, based on the configured uplink-downlink configuration or the DCI format configured to be monitored, the first time domain resource offset value set in the group of time domain resource offset value sets that are between the PSFCH and the PUCCH and that are configured by the network device. Alternatively, the first terminal device may specifically determine, based on the configured uplink-downlink configuration or the DCI format configured to be monitored, the first time domain resource offset value set in the group of time domain resource offset value sets that are between the PSFCH and the PUCCH and that are predefined in the protocol.

For example, the network device configures a group of time domain resource offset value sets between the PSFCH and the PUCCH for the first terminal device. The group of time domain resource offset value sets include time domain resource offset value sets 1 to 5. The first terminal device stores a correspondence between the time domain resource offset value sets 1 to 5 and the TDD uplink-downlink configuration. The correspondence is shown in Table 1 below. If a carrier used by the first terminal device to send a PSSCH to a second terminal device is used exclusively for sidelink transmission, the first terminal device determines the first time domain resource offset value set as the time domain resource offset value set 1. If a TDD uplink-downlink configuration of a carrier used by the first terminal device to send a PSSCH to a second terminal device is 4_1_DDDFUDDDFU, the first terminal device determines the first time domain resource offset value set as the time domain resource offset value set 2. If a TDD uplink-downlink configuration of a carrier used by the first terminal device to send a PSSCH to a second terminal device is 7_3_DDDFUDDFUU, the first terminal device determines the first time domain resource offset value set as the time domain resource offset value set 3. If a TDD uplink-downlink configuration of a carrier used by the first terminal device to send a PSSCH to a second terminal device is 8_2_DDDDDDDFUU, the first terminal device determines the first time domain resource offset value set as the time domain resource offset value set 4. If a TDD uplink-downlink configuration of a carrier used by the first terminal device to send a PSSCH to a second terminal device is 8_2_DDDFUUDDDD, the first terminal device determines the first time domain resource offset value set as the time domain resource offset value set 5. D represents a downlink slot, U represents an uplink slot, and F represents a flexible slot.

**Table 1**

| Serial number | TDD uplink-downlink configuration (TDD-DL-UL pattern) | Time domain resource offset value set between the PSFCH and the PUCCH |
|---|---|---|
| 0 | Carriers used exclusively for SL transmission (SL exclusive carrier) | Time domain resource offset value set 1 {0, 1, 2, ..., 14, 15} |
| 1 | 4_1_DDDFUDDDFU | Time domain resource offset value set 2 {5, 10, 15, 20, 25, 30, 35, 40} |
| 2 | 7_3_DDDFUDDFUU | Time domain resource offset value set 3 {1, 4, 5, 6, 11, 14, 15, 16} |
| 3 | 8_2_DDDDDDDFUU | Time domain resource offset value set 4 {1, 9, 10, 11, 19, 20, 21, 29} |
| 4 | 8_2_DDDFUUDDDD | Time domain resource offset value set 5 {1, 9, 10, 11, 19, 20, 21, 29} |
| 5 to 7 | Reserved (reserved) | |

For another example, the network device configures, for the first terminal device, a group of time domain resource offset value sets between the PSFCH and the PUCCH. The group of time domain resource offset value sets include a time domain resource offset value set 1 {1, 2, ..., 8} and a time domain resource offset value set 2 {1, 2, ..., 32}. The first terminal device prestores a correspondence between the time domain resource offset value set and the DCI format configured to be monitored. For example, the time domain resource offset value set 1 corresponds to a DCI format 3-0, and the time domain resource offset value set 2 corresponds to a DCI format 3-1. If the first terminal device is configured to monitor the DCI format 3-0, the first terminal device determines the first time domain resource offset value set as the time domain resource offset value set 1. If the first terminal device is configured to monitor the DCI format 3-1, the first terminal device determines the first time domain resource offset value set as the time domain resource offset value set 2.

In a possible implementation, the first time domain resource offset value set may alternatively be any time domain resource offset value set in the group of time domain resource offset value sets that are between the PSFCH and the PUCCH and that are configured by the network device for the terminal device. Alternatively, the first time domain resource offset value set may be any time domain resource offset value set in the group of time domain resource offset value sets that are between the PSFCH and the PUCCH and that are predefined in the protocol.

In a possible implementation, the network device may alternatively configure a time domain resource offset value set between the PSFCH and the PUCCH for the first terminal device. In this case, the first time domain resource offset value set is the time domain resource offset value set that is between the PSFCH and the PUCCH and that is configured by the network device for the first terminal device.

In a possible implementation, a time domain resource offset value set between the PSFCH and the PUCCH may be predefined in a protocol. In this case, the first time domain resource offset value set is the time domain resource offset value set that is between the PSFCH and the PUCCH and that is predefined in the protocol.

202: The first terminal device determines a PSFCH reception occasion based on the first time domain resource offset value set and a feedback period of the PSFCH.

In this embodiment of this application, after determining the first time domain resource offset value set, the first terminal device determines the PSFCH reception occasion based on the first time domain resource offset value set and the feedback period of the PSFCH. The PSFCH reception occasion includes a time domain resource and a frequency domain resource. The time domain resource in the PSFCH reception occasion is a time domain resource for detecting the PSFCH, and the frequency domain resource in the PSFCH reception occasion is a frequency domain resource for detecting the PSFCH. Specifically, the first terminal device determines the time domain resource in the PSFCH reception occasion based on the first time domain resource offset value set and the feedback period of the PSFCH. The first terminal device may obtain the frequency domain resource in the PSFCH reception occasion in another manner. For example, the frequency domain resource in the PSFCH reception occasion is pre-specified in a protocol, or is preconfigured by the network device. There may be one or more PSFCH reception occasions determined by the first terminal device based on the first time domain resource offset value set and the feedback period of the PSFCH.

Throughout this embodiment of this application, a set formed by differences between a carrier time domain resource of the PUCCH and time domain resource offset values in the first time domain resource offset value set is defined as a carrier time domain resource set corresponding to the first time domain resource offset value set. For example, if the first time domain resource offset value set is {1, 2, 3, 4, 5, 6, 7, 8}, and the time domain resource of the PUCCH is a slot n, the carrier time domain resource set corresponding to the first time domain resource offset value set is {n-8, n-7, n-6, n-5, n-4, n-3, n-2, n-1}. Some carrier time domain resources in the carrier time domain resource set corresponding to the first time domain resource offset value set may not be the time domain resource in the PSFCH reception occasion. After the first terminal device determines the first time domain resource offset value set, if the first terminal device directly determines the carrier time domain resource set corresponding to the first time domain resource offset value set as the time domain resource in the PSFCH reception occasion, the determined time domain resource in the PSFCH reception occasion may be inaccurate. Therefore, in the method described in FIG. 2, the first terminal device determines the time domain resource in the PSFCH reception occasion further with reference to the feedback period of the PSFCH. The first terminal device may perform, based on the feedback period of the PSFCH, filtering on the carrier time domain resources in the carrier time domain resource set corresponding to the first time domain resource offset value set, reserve a carrier time domain resource that meets the feedback period of the PSFCH, and determine the carrier time domain resource that is in the carrier time domain resource set corresponding to the first time domain resource offset value set and that meets the feedback period of the PSFCH as the time domain resource in the PSFCH reception occasion. Therefore, the method described in FIG. 2 helps accurately determine the PSFCH reception occasion.

The following describes in detail a specific implementation of determining the PSFCH reception occasion based on the first time domain resource offset value set and the feedback period of the PSFCH.

In a possible implementation, a specific implementation of determining, by the first terminal device, the PSFCH reception occasion based on the first time domain resource offset value set and the feedback period of the PSFCH is: determining a second time domain resource offset value set in the first time domain resource offset value set, where a carrier time domain resource corresponding to a time domain resource offset value in the second time domain resource offset value set is used for sidelink transmission; and determining the PSFCH reception occasion based on the second time domain resource offset value set and the feedback period of the PSFCH. The carrier time domain resource corresponding to the time domain resource offset value is a difference between the time domain resource of the PUCCH and the time domain resource offset value. The carrier time domain resource may also be referred to as a physical time domain resource, and is a time domain resource in a system frame. For example, if the time domain resource offset value is 1, and the time domain resource of the PUCCH is a slot n, the carrier time domain resource corresponding to the time domain resource offset value is a slot n-1.

In this possible implementation, the first terminal device may remove some time domain resource offset values from the first time domain resource offset value set, to obtain the second time domain resource offset value set. For example, one or more types of the following time domain resource offset values may be removed from the first time domain resource offset value set: 1. A carrier time domain resource corresponding to the time domain resource offset value is a downlink time domain resource. 2. A carrier time domain resource corresponding to the time domain resource offset value is an uplink slot that is not configured for sidelink transmission. 3. A carrier time domain resource corresponding to the time domain resource offset value is a flexible slot that does not include a symbol used for sidelink transmission.

For example, if the first time domain resource offset value set is {1, 2, 3, 4, 5, 6, 7, 8}, and the carrier time domain resource of the PUCCH is a slot n, the carrier time domain resource set corresponding to the first time domain resource offset value set is {n-8, n-7, n-6, n-5, n-4, n-3, n-2, n-1}. If the slot n-5 is a downlink time domain resource, the slot n-6 is an uplink slot that is not configured for sidelink transmission, and the slot n-7 and the slot n-8 are flexible slots that do not include a symbol used for sidelink transmission, time-frequency resource offset values {5, 6, 7, 8} are removed from the first time domain resource offset value set, and the obtained second time domain resource offset value set is {1, 2, 3, 4}.

Based on this optional implementation, the first time domain resource offset value set may be filtered to obtain the second time domain resource offset value set, and the PSFCH reception occasion may be more accurately determined based on the second time domain resource offset value set and the feedback period of the PSFCH.

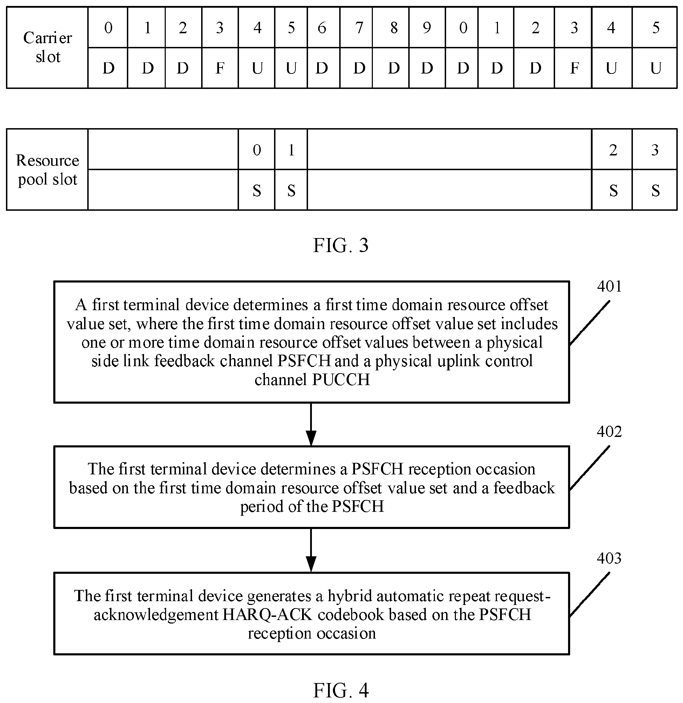

In a possible implementation, a specific implementation of determining, by the first terminal device, the PSFCH reception occasion based on the second time domain resource offset value set and the feedback period of the PSFCH is: determining the PSFCH reception occasion based on an index of the carrier time domain resource corresponding to the time domain resource offset value in the second time domain resource offset value set, the feedback period of the PSFCH, and a time domain resource index offset value, where the time domain resource index offset value is an offset value between an index of a resource pool time domain resource for sidelink transmission and the index of the carrier time domain resource. The resource pool time domain resource for sidelink transmission may be a logical resource. A resource pool is a resource set that is configured by the network device or preconfigured in a protocol and that is used for sidelink transmission, and the resource pool time domain resource is a resource that is in the resource pool and that is used for sidelink transmission between terminals. For example, both the carrier time domain resource and the resource pool time domain resource are slots. As shown in FIG. 3, a slot index offset value between a carrier slot and a resource pool slot is 4. D represents a downlink slot, U represents an uplink slot, F represents a flexible slot, and S represents a sidelink transmission slot. Based on this possible implementation, the PSFCH reception occasion that meets the feedback period of the PSFCH can be accurately determined.

In a possible implementation, a specific implementation of determining, by the first terminal device, the PSFCH reception occasion based on the index of the carrier time domain resource corresponding to the time domain resource offset value in the second time domain resource offset value set, the feedback period of the PSFCH, and the time domain resource index offset value is: if an index of a first carrier time domain resource satisfies

$$\mathrm{mod}\left(\left(L_{physical}^{SL} - O_{phy-to-\log}\right), N\right) = 0$$, determining that the first carrier time domain resource is a time domain resource in the PSFCH reception occasion, where the first carrier time domain resource is a carrier time domain resource corresponding to any time domain resource offset value in the second time domain resource offset value set, $L_{physical}^{SL}$ is the index of the first carrier time domain resource, $O_{phy-to-\log}$ is the time domain resource index offset value, and N is the feedback period of the PSFCH.

For example, the second time domain resource offset value set is {1, 2, 3, 4}. If a slot of the PUCCH is a slot 9, a carrier slot set corresponding to the second time domain resource offset value set is {5, 6, 7, 8}. A specific implementation of first determining, by the first terminal device, whether the slot 8 is a time domain resource in the PSFCH reception occasion is: determining whether an index of the slot 8 satisfies $\mathrm{mod}\left(\left(L_{physical}^{SL} - O_{phy-to-\log}\right), N\right) = 0$, where $L_{physical}^{SL}$ is the index of the slot 8, that is, 8. It is assumed that $O_{phy-to-\log}$ is 4 and N is 4. Because mod((8 - 4), 4) = 0, the first terminal device determines that the slot 8 is the time domain resource in the PSFCH reception occasion. The first terminal device determines, according to a same principle, whether the slot 7, the slot 6, and the slot 5 are time domain resources in the PSFCH reception occasion.

Based on this possible implementation, the PSFCH reception occasion that meets the feedback period of the PSFCH can be accurately determined.

In a possible implementation, a second time domain resource set used for sidelink transmission may be directly determined in the carrier time domain resource set corresponding to the first time domain resource offset value set, and then the PSFCH reception occasion is determined in the second time domain resource set based on the feedback period of the PSFCH. For example, the PSFCH reception occasion is determined based on an index of a carrier time domain resource in the second time domain resource set, the feedback period of the PSFCH, and the time domain resource index offset value. The time domain resource index offset value is an offset value between the index of the resource pool time domain resource for sidelink transmission and the index of the carrier time domain resource. A specific implementation of determining the PSFCH reception occasion based on the index of the carrier time domain resource, the feedback period of the PSFCH, and the time domain resource index offset value is the same as that described above, and details are not described herein again.

In a possible implementation, the first terminal device may first obtain through filtering a third time domain resource offset value set from the first time domain resource offset value set based on the feedback period of the PSFCH, then determine a carrier time domain resource that is used for sidelink transmission and that is in a carrier time domain resource set corresponding to the third time domain resource offset value set as the time domain resource in the PSFCH reception occasion. Based on this possible implementation, the first filtering operation may be first performed based on the feedback period of the PSFCH, and then the second filtering operation is performed based on the time domain resource used for sidelink transmission.

In a possible implementation, after obtaining the first time domain resource offset value set, the first terminal device may directly determine the PSFCH reception occasion with reference to the feedback period of the PSFCH. In other words, the first terminal device can obtain the second time domain resource offset value set without removing values from the first time domain resource offset value set. An implementation principle in which the first terminal device directly determines the PSFCH reception occasion based on the first time domain resource offset value set and the feedback period of the PSFCH is the same as an implementation principle in which the first terminal device determines the PSFCH reception occasion based on the second time domain resource offset value set and the feedback period of the PSFCH, and details are not described herein again.

FIG. 4 is a schematic flowchart of a method for determining a channel reception occasion according to an embodiment of this application. As shown in FIG. 4, the method for determining a channel reception occasion includes the following step 401 and step 403. The method shown in FIG. 4 may be performed by a first terminal device, or may be performed by a chip in a first terminal device. In FIG. 4, an example in which the method is performed by the first terminal device is used for description. An execution body of the method for determining a channel reception occasion shown in another accompanying drawing in the embodiments of this application is also the first terminal device, and details are not described below again.

401: The first terminal device determines a first time domain resource offset value set, where the first time domain resource offset value set includes one or more time domain resource offset values between a physical sidelink feedback channel PSFCH and a physical uplink control channel PUCCH.

402: The first terminal device determines a PSFCH reception occasion based on the first time domain resource offset value set and a feedback period of the PSFCH.

For specific implementations of step 401 and step 402, refer to step 201 and step 202. Details are not described herein again.

403: The first terminal device generates a hybrid automatic repeat request-acknowledgement HARQ-ACK codebook based on the PSFCH reception occasion.

In this embodiment of this application, after determining the PSFCH reception occasion, the first terminal device generates the hybrid automatic repeat request-acknowledgement HARQ-ACK codebook based on the PSFCH reception occasion.

A size of the HARQ-ACK codebook may have two cases:

Case 1: The size of the HARQ-ACK codebook is related to one or more of the following parameters: a quantity of PSFCH reception occasions and a quantity of bits of hybrid automatic repeat request-acknowledgement HARQ-ACK information that needs to be fed back in each PSFCH reception occasion. For example, the size of the HARQ-ACK codebook is related to the quantity of PSFCH reception occasions. Alternatively, the size of the HARQ-ACK codebook is related to the quantity of bits of the hybrid automatic repeat request-acknowledgement HARQ-ACK information that needs to be fed back in each PSFCH reception occasion. Alternatively, the size of the HARQ-ACK codebook is related to the quantity of PSFCH reception occasions and the quantity of bits of the hybrid automatic repeat request-acknowledgement HARQ-ACK information that needs to be fed back in each PSFCH reception occasion. The HARQ-ACK information of each PSSCH can be successfully fed back by using the HARQ-ACK codebook generated based on this possible implementation.

In a possible implementation, $G_{SLHARQ}^{Total} = G_{SLHARQ}^{PSFCH} \cdot N_{occasion}$, where $G_{SLHARQ}^{Total}$ is the size of the HARQ-ACK codebook, $G_{SLHARQ}^{PSFCH}$ is the quantity of bits of the HARQ-ACK information that needs to be fed back in each PSFCH reception occasion, and $N_{occasion}$ is the quantity of PSFCH reception occasions. For example, if time domain resources in eight PSFCH reception occasions are determined based on the first time domain resource offset value set and the feedback period of the PSFCH, and a quantity of bits of HARQ-ACK information that needs to be fed back in each PSFCH reception occasion is 12, the size of the HARQ-ACK codebook is 8*12=96 bits.

In a possible implementation, $G_{SLHARQ}^{Total} = G_{SLHARQ}^{PSFCH} \cdot N_{occasion} + X$, where X may be an integer greater than or equal to 1.

In a possible implementation, the quantity of bits of the HARQ-ACK information that needs to be fed back in each PSFCH reception occasion is related to one or more of the following parameters: a quantity of subchannels in a resource pool for sidelink transmission, the feedback period of the PSFCH, and a quantity of bits of HARQ-ACK information that needs to be fed back through each physical sidelink shared channel PSSCH. In this possible implementation, the quantity of bits of the HARQ-ACK information that needs to be fed back in each PSFCH reception occasion is determined, so that the HARQ-ACK information of each PSSCH can be successfully fed back by using the HARQ-ACK codebook.

For example, the quantity of bits of the HARQ-ACK information that needs to be fed back in each PSFCH reception occasion is related to the quantity of subchannels in the resource pool for sidelink transmission. Alternatively, the quantity of bits of the HARQ-ACK information that needs to be fed back in each PSFCH reception occasion is related to the feedback period of the PSFCH. Alternatively, the quantity of bits of the HARQ-ACK information that needs to be fed back in each PSFCH reception occasion is related to the quantity of bits of the HARQ-ACK information that needs to be fed back through each physical sidelink shared channel PSSCH. Alternatively, the quantity of bits of the HARQ-ACK information that needs to be fed back in each PSFCH reception occasion is related to the quantity of subchannels in the resource pool for sidelink transmission and the feedback period of the PSFCH. Alternatively, the quantity of bits of the HARQ-ACK information that needs to be fed back in each PSFCH reception occasion is related to the feedback period of the PSFCH and the quantity of bits of the HARQ-ACK information that needs to be fed back through each physical sidelink shared channel PSSCH. Alternatively, the quantity of bits of the HARQ-ACK information that needs to be fed back in each PSFCH reception occasion is related to the quantity of subchannels in the resource pool for sidelink transmission and the quantity of bits of the HARQ-ACK information that needs to be fed back through each physical sidelink shared channel PSSCH. Alternatively, the quantity of bits of the HARQ-ACK information that needs to be fed back in each PSFCH reception occasion is related to the quantity of subchannels in the resource pool for sidelink transmission, the feedback period of the PSFCH, and the quantity of bits of the HARQ-ACK information that needs to be fed back through each physical sidelink shared channel PSSCH.

In a possible implementation, if the quantity of subchannels in the resource pool for sidelink transmission is 1, the quantity of bits of the HARQ-ACK information that needs to be fed back in each PSFCH reception occasion is related to the feedback period of the PSFCH and the quantity of bits of the HARQ-ACK information that needs to be fed back through each physical sidelink shared channel PSSCH.

In a possible implementation, if the feedback period of the PSFCH is 1, the quantity of bits of the HARQ-ACK information that needs to be fed back in each PSFCH reception occasion is related to the quantity of subchannels in the resource pool for sidelink transmission and the quantity of bits of the HARQ-ACK information that needs to be fed back through each physical sidelink shared channel PSSCH.

In a possible implementation, if the quantity of bits of the HARQ-ACK information that needs to be fed back through each PSSCH is 1, the quantity of bits of the HARQ-ACK information that needs to be fed back in each PSFCH reception occasion is related to the quantity of subchannels in the resource pool for sidelink transmission and the feedback period of the PSFCH.

In a possible implementation, $G_{SLHARQ}^{PSFCH} = M_{subchannel} \cdot N \cdot G_{SLHARQ}^{PSSCH}$, $G_{SLHARQ}^{PSFCH}$ is the quantity of bits of the HARQ-ACK information that needs to be fed back in each PSFCH reception occasion, $M_{subchannel}$ is the quantity of subchannels in the resource pool for sidelink transmission, N is the feedback period of the PSFCH, and $G_{SLHARQ}^{PSSCH}$ is the quanty of bits of the HARQ-ACK information that needs to be fed back through each PSSCH.

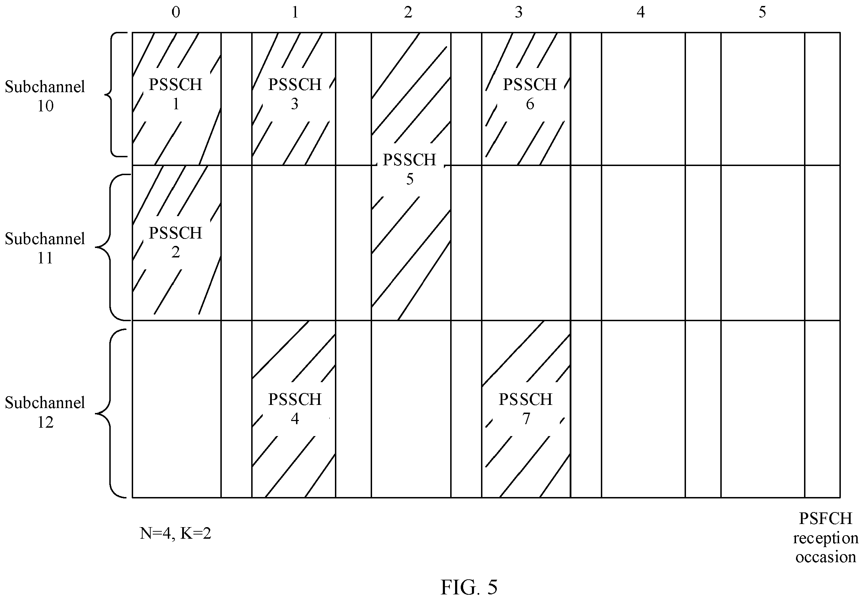

For example, as shown in FIG. 5, the quantity of subchannels in the resource pool for sidelink transmission is 3, and the subchannels in the resource pool for sidelink transmission include a subchannel 10, a subchannel 11, and a subchannel 12. The first terminal device sends a PSSCH 1 in a slot 0 by using the subchannel 10 as a start subchannel. The first terminal device sends a PSSCH 2 in the slot 0 by using the subchannel 11 as a start subchannel. The first terminal device sends a PSSCH 3 in a slot 1 by using the subchannel 10 as a start subchannel. The first terminal device sends a PSSCH 4 in the slot 1 by using the subchannel 12 as a start subchannel. The first terminal device sends a PSSCH 5 in a slot 2 by using the subchannel 10 as a start subchannel. The first terminal device sends a PSSCH 6 in a slot 3 by using the subchannel 10 as a start subchannel. The first terminal device sends a PSSCH 7 in a slot 7 by using the subchannel 12 as a start subchannel. The first terminal device may detect a PSFCH 1 to a PSFCH 7 corresponding to the PSSCH 1 to the PSSCH 7 in the PSFCH reception occasion. In FIG. 5, N is the feedback period of the PSFCH, and K is a minimum time domain resource interval between the PSSCH and the PSFCH.

In each PSFCH reception occasion, the first terminal device arranges bits in a codebook in a manner of frequency domain first and time domain second based on an index of the start subchannel. When the first terminal device sequentially detects a PSSCH that is sent by using a subchannel as the start channel, the first terminal device feeds back, in the codebook, HARQ-ACK information in a PSFCH corresponding to the PSSCH. If not detecting, on a subchannel, a PSSCH that is sent by using the subchannel as the start subchannel, the first terminal device feeds back a NACK at a corresponding bit location in the codebook. Assuming that only 1-bit HARQ information is fed back through each PSSCH feeds back, because the quantity of subchannels in the resource pool for sidelink transmission is 3, and the feedback period N of the PSFCH is 4, in terms of the quantity of bits of the HARQ-ACK information that needs to be fed back through each PSSCH, 12-bit SL HARQ information needs to be fed back in each PSFCH reception occasion. Assuming that HARQ-ACK information received by the first terminal device in the PSFCH 1 to the PSFCH 7 is {ACK, ACK, ACK, NACK, ACK, NACK, ACK}, a codebook that is generated by the first terminal device and that corresponds to the PSFCH reception occasion is: {ACK, ACK, NACK, ACK, NACK, NACK, ACK, NACK, NACK, NACK, NACK, ACK}.

Finally, the first terminal device forms a final HARQ-ACK codebook in a front-to-back sequence of the PSFCH reception occasions. If there are eight PSFCH reception occasions, a total size of the HARQ-ACK that needs to be reported by the first terminal device to the network device is 8*12=96 bits.

Case 2: The size of the HARQ-ACK codebook is related to one or more of the following parameters: a total quantity of HARQ processes supported by a terminal device and a quantity of bits of HARQ-ACK information generated in each HARQ process. This possible implementation helps reduce a codebook size.

For example, the size of the HARQ-ACK codebook is related to the total quantity of HARQ processes supported by the terminal device. Alternatively, the size of the HARQ-ACK codebook is related to the quantity of bits of the HARQ-ACK information generated in each HARQ process. Alternatively, the size of the HARQ-ACK codebook is related to the total quantity of HARQ processes supported by the terminal device and the quantity of bits of the HARQ-ACK information generated in each HARQ process.

In a possible implementation, $G_{SLHARQ}^{Total} = P \cdot g_{HARQ-ACK}^{process}$ , $G_{SLHARQ}^{Total}$ is the size of the HARQ-ACK codebook, P is the total quantity of HARQ processes supported by the terminal device, and $g_{HARQ-ACK}^{process}$ is the quantity of bits of the HARQ-ACK information generated in each HARQ process. The size of the HARQ-ACK codebook generated based on this possible implementation is relatively small.

The quantity of PSFCH reception occasions is relatively large, and when the feedback period of the PSFCH and the quantity of subchannels in the resource pool for sidelink transmission are relatively large, a quantity of bits corresponding to each PSFCH reception occasion is also relatively large. Therefore, a finally generated codebook is also relatively large. However, for a terminal device, each PSSCH transmission corresponds to a sidelink HARQ process identifier (HARQ process ID). In addition, before the network device receives a corresponding HARQ-ACK message and schedules a newly transmitted PSSCH, the HARQ process identifier is always reserved for one PSSCH transmission. In addition, a total quantity of sidelink HARQ processes supported by each terminal device is relatively fixed and has an upper limit. Therefore, a semi-persistent codebook may be generated based on the total quantity of HARQ processes.

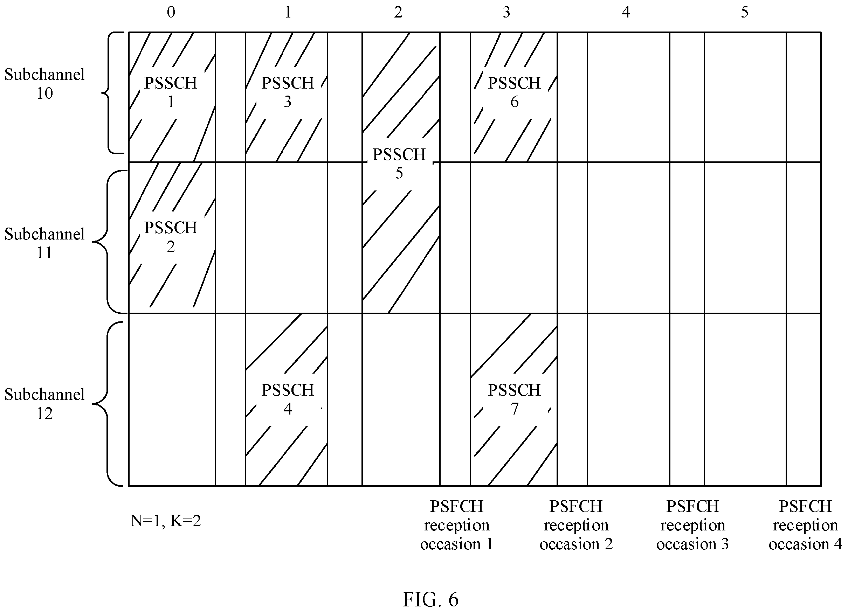

For example, as shown in FIG. 6, there are four PSFCH reception occasions. In FIG. 6, N is the feedback period of the PSFCH, and K is a minimum time domain resource interval between the PSSCH and the PSFCH. Assuming that the first terminal device supports a total of 16 sidelink HARQ processes, and a quantity of bits of HARQ-ACK information generated in each HARQ process is 1, the first terminal device only needs to generate 16-bit HARQ information based on the total quantity of HARQ processes.

In a possible implementation, a specific implementation of generating the HARQ-ACK codebook based on the PSFCH reception occasion is: arranging, in ascending order of HARQ process identifiers, bits that are in the HARQ-ACK codebook and that indicate HARQ-ACK information. Assuming that HARQ-ACK information in the PSFCH 1 to the PSFCH 7 received by the first terminal device is {ACK, ACK, ACK, NACK, ACK, NACK, ACK}, the HARQ-ACK codebook finally generated by the first terminal device is shown in the following Table 2.

**Table 2**

| HARQ process identifier | PSSCH transmission | HARQ-ACK codebook |
|---|---|---|
| 0 | PSSCH 3 | ACK |
| 1 | - | NACK |
| 2 | PSSCH 4 | NACK |
| 3 | - | NACK |
| 4 | - | NACK |
| 5 | PSSCH 1 | ACK |

(continued)

| HARQ process identifier | PSSCH transmission | HARQ-ACK codebook |
| --- | --- | --- |
| 6 | - | NACK |
| 7 | PSSCH 7 | NACK |
| 8 | - | NACK |
| 9 | PSSCH 2 | ACK |
| 10 | PSSCH 5 | ACK |
| 11 | PSSCH 6 | NACK |
| 12 | - | NACK |
| 13 | - | NACK |
| 14 | - | NACK |
| 15 | - | NACK |

In a possible implementation, after generating the HARQ-ACK codebook, the first terminal device sends the HARQ-ACK codebook to the network device.

In a possible implementation, the HARQ-ACK codebook includes hybrid automatic repeat request-acknowledgement HARQ-ACK information of a first preconfigured physical sidelink shared channel CG PSSCH; and the first CG PSSCH is a CG PSSCH with a highest priority that is in a plurality of CG PSSCHs and through which the HARQ-ACK information needs to be fed back to the network device, the first CG PSSCH is a CG PSSCH with a shortest period that is in a plurality of CG PSSCHs and through which the HARQ-ACK information needs to be fed back to the network device, the first CG PSSCH is a CG PSSCH in a plurality of CG PSSCHs that is last transmitted and through which the HARQ-ACK information needs to be fed back to the network device, or the first CG PSSCH is a CG PSSCH with a smallest HARQ process identifier that is in a plurality of CG PSSCHs and through which the HARQ-ACK information needs to be fed back to the network device. Based on this possible implementation, because the codebook size is limited, when there are a plurality of CG PSSCHs through which the HARQ-ACK information needs to be fed back to the network device, an optimal CG PSSCH can be selected to feed back the HARQ-ACK information.

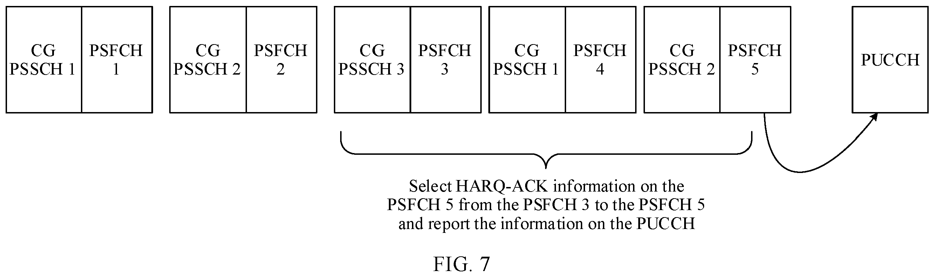

In a possible implementation, if a CG PSSCH in the plurality of CG PSSCHs is retransmitted, the first terminal device determines the first CG PSSCH in a CG PSSCH that is in the plurality of CG PSSCHs and that is not retransmitted, and a CG PSSCH that is last retransmitted. As shown in FIG. 7, the first terminal device transmits a CG PSSCH 1, a CG PSSCH 2, and a CG PSSCH 3. The first terminal device retransmits the CG PSSCH 1 and the CG PSSCH 2. Therefore, the first terminal device determines the first CG PSSCH in the CG PSSCH 3, the retransmitted CG PSSCH 1, and the retransmitted CG PSSCH 2. For example, the first CG PSSCH may be a CG PSSCH with a highest priority in the CG PSSCH 3, the retransmitted CG PSSCH 1, and the retransmitted CG PSSCH 2. Alternatively, the first CG PSSCH may be a CG PSSCH with a minimum period in the CG PSSCH 3, the retransmitted CG PSSCH 1, and the retransmitted CG PSSCH 2. Alternatively, the first CG PSSCH may be a last transmitted CG PSSCH in the CG PSSCH 3, the retransmitted CG PSSCH 1, and the retransmitted CG PSSCH 2, that is, the retransmitted CG PSSCH 2. Alternatively, the first CG PSSCH may be a CG PSSCH with a smallest HARQ process identifier in the CG PSSCH 3, the retransmitted CG PSSCH 1, and the retransmitted CG PSSCH 2. In FIG. 7, an example in which the first CG PSSCH is the last transmitted CG PSSCH in the CG PSSCH 3, the retransmitted CG PSSCH 1, and the retransmitted CG PSSCH 2 is used.

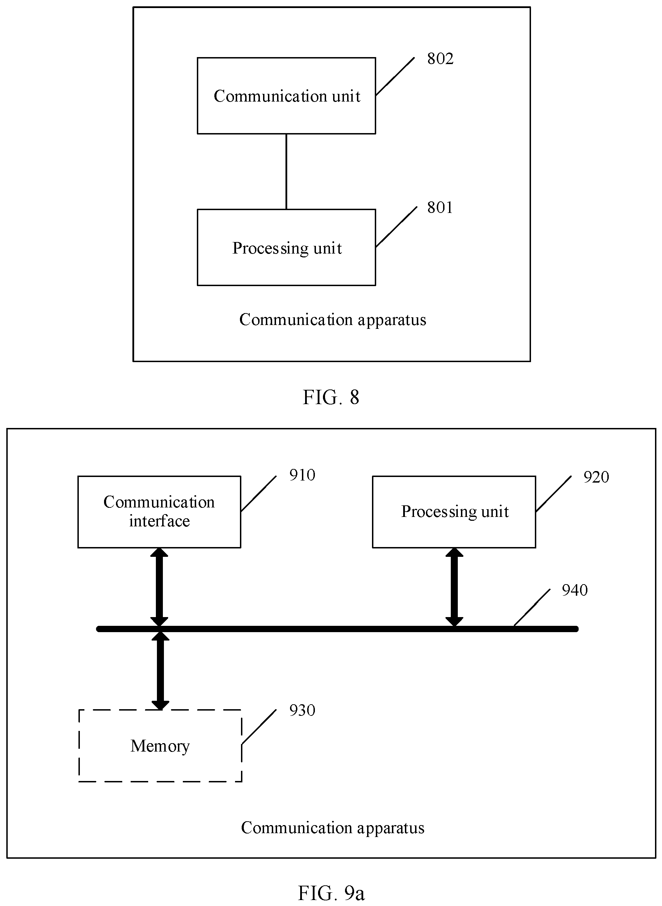

FIG. 8 is a schematic structural diagram of a communication apparatus according to an embodiment of this application. The communication apparatus shown in FIG. 8 may be configured to perform some or all functions of the first terminal device in the method embodiments described in FIG. 2 and FIG. 4. The apparatus may be the first terminal device, may be an apparatus in the first terminal device, or may be an apparatus that can be used in cooperation with the first terminal device. The communication apparatus may alternatively be a chip system. The communication apparatus shown in FIG. 8 may include a processing unit 801 and a communication unit 802. The communication unit 802 is configured to communicate with a network device and a second terminal device or another network element. The communication unit 802 may also be referred to as a transceiver unit, or the communication unit 802 may be split into a receiving unit 801 and a communication unit 802.

The processing unit 801 is configured to determine a first time domain resource offset value set, where the first time domain resource offset value set includes one or more time domain resource offset values between a physical sidelink feedback channel PSFCH and a physical uplink control channel PUCCH. The processing unit 801 is further configured to determine a PSFCH reception occasion based on the first time domain resource offset value set and a feedback period of the PSFCH.

In a possible implementation, a manner in which the processing unit 801 determines the PSFCH reception occasion based on the first time domain resource offset value set and the feedback period of the PSFCH is specifically:

determining a second time domain resource offset value set in the first time domain resource offset value set, where a carrier time domain resource corresponding to a time domain resource offset value in the second time domain resource offset value set is used for sidelink transmission; and
determining the PSFCH reception occasion based on the second time domain resource offset value set and the feedback period of the PSFCH.

In a possible implementation, a manner in which the processing unit 801 determines the PSFCH reception occasion based on the second time domain resource offset value set and the feedback period of the PSFCH is specifically: determining the PSFCH reception occasion based on an index of the carrier time domain resource corresponding to the time domain resource offset value in the second time domain resource offset value set, the feedback period of the PSFCH, and a time domain resource index offset value, where the time domain resource index offset value is an offset value between an index of a resource pool time domain resource for sidelink transmission and the index of the carrier time domain resource.

In a possible implementation, that the processing unit 801 determines the PSFCH reception occasion based on the index of the carrier time domain resource corresponding to the time domain resource offset value in the second time domain resource offset value set, the feedback period of the PSFCH, and the time domain resource index offset value includes:

if an index of a first carrier time domain resource satisfies $\mod\left(\left(L_{physical}^{SL} - O_{phy\text{-}to\text{-}\log}\right), N\right) = 0$, determining that the first carrier time domain resource is a time domain resource in the PSFCH reception occasion, where the first carrier time domain resource is a carrier time domain resource corresponding to any time domain resource offset value in the second time domain resource offset value set, $L_{physical}^{SL}$ is the index of the first carrier time domain resource, $O_{phy\text{-}to\text{-}\log}$ is the time domain resource index offset value, and N is the feedback period of the PSFCH.

In a possible implementation, the processing unit 801 is further configured to generate a hybrid automatic repeat request-acknowledgement HARQ-ACK codebook based on the PSFCH reception occasion, where a size of the HARQ-ACK codebook is related to one or more of the following parameters: a quantity of PSFCH reception occasions and a quantity of bits of hybrid automatic repeat request-acknowledgement HARQ-ACK information that needs to be fed back in each PSFCH reception occasion.

In a possible implementation, the quantity of bits of the HARQ-ACK information that needs to be fed back in each PSFCH reception occasion is related to one or more of the following parameters: a quantity of subchannels in a resource pool for sidelink transmission, the feedback period of the PSFCH, and a quantity of bits of HARQ-ACK information that needs to be fed back through each physical sidelink shared channel PSSCH.

In a possible implementation, $G_{SLHARQ}^{PSFCH} = M_{subchannel} \cdot N \cdot G_{SLHARQ}^{PSSCH}$, $G_{SLHARQ}^{PSFCH}$ is the quantity of bits of the HARQ-ACK information that needs to be fed back in each PSFCH reception occasion, $M_{subchannel}$ is the quantity of subchannels in the resource pool for sidelink transmission, N is the feedback period of the PSFCH, and $G_{SLHARQ}^{PSSCH}$ is the quantity of bits of the HARQ-ACK information that needs to be fed back through each PSSCH.

In a possible implementation, the processing unit 801 is further configured to generate a hybrid automatic repeat request-acknowledgement HARQ-ACK codebook based on the PSFCH reception occasion, where a size of the HARQ-ACK codebook is related to one or more of the following parameters: a total quantity of HARQ processes supported by a terminal device and a quantity of bits of HARQ-ACK information generated in each HARQ process.

In a possible implementation, $G_{SLHARQ}^{Total} = P \cdot g_{HARQ\text{-}ACK}^{process}$, $G_{SLHARQ}^{Total}$ is the size of the HARQ-ACK codebook, P is the total quantity of HARQ processes supported by the terminal device, and $g_{HARQ\text{-}ACK}^{process}$ is the quantity of bits of the HARQ-ACK information generated in each HARQ process.

In a possible implementation, the HARQ-ACK codebook includes hybrid automatic repeat request-acknowledgement HARQ-ACK information of a first preconfigured physical sidelink shared channel CG PSSCH; and the first CG PSSCH is a CG PSSCH with a highest priority that is in a plurality of CG PSSCHs and through which the HARQ-ACK information needs to be fed back to a network device, the first CG PSSCH is a CG PSSCH with a shortest period that is in a plurality of CG PSSCHs and through which the HARQ-ACK information needs to be fed back to a network device, the first CG PSSCH is a CG PSSCH in a plurality of CG PSSCHs that is last transmitted and through which the HARQ-ACK information needs to be fed back to a network device, or the first CG PSSCH is a CG PSSCH with a smallest HARQ process identifier that is in a plurality of CG PSSCHs and through which the HARQ-ACK information needs to be fed back to a network device.

In a possible implementation, a manner in which the processing unit 801 determines the first time domain resource offset value set is specifically:

determining the first time domain resource offset value set based on a configured uplink-downlink configuration or based on a downlink control information DCI format configured to be monitored.

FIG. 9a shows a communication apparatus 90 according to an embodiment of this application. The communication apparatus 90 is configured to implement functions of the first terminal device in the foregoing methods. The apparatus may be a terminal device or an apparatus applied to a terminal device. The apparatus applied to the terminal device may be a chip system or a chip in the terminal device. The chip system may include a chip, or may include a chip and another discrete component. Alternatively, the communication apparatus 90 is configured to implement functions of the communication device in the foregoing methods. The apparatus may be a communication device or an apparatus applied to a communication device. The apparatus applied to the communication device may be a chip system or a chip in the communication device. The chip system may include a chip, or may include a chip and another discrete component.

The communication apparatus 90 includes at least one processor 99, configured to implement a data processing function of the first terminal device in the methods provided in the embodiments of this application. The apparatus 90 may further include a communication interface 910, configured to implement receiving and sending operations of the terminal device or the network device in the methods provided in the embodiments of this application. In this embodiment of this application, the communication interface may be a transceiver, a circuit, a bus, a module, or a communication interface of another type, and is configured to communicate with another device through a transmission medium. For example, the communication interface 910 is used by an apparatus in the apparatus 90 to communicate with another device. The processor 99 receives and sends data through the communication interface 910, and is configured to implement the methods in the foregoing method embodiments.

The apparatus 90 may further include at least one memory 930, configured to store program instructions and/or data. The memory 930 is coupled to the processor 99. Coupling in this embodiment of this application may be indirect coupling or communication connection between apparatuses, units, or modules in an electrical form, a mechanical form, or another form, and is used for information exchange between the apparatuses, the units, or the modules. The processor 99 may operate in collaboration with the memory 930. The processor 99 may execute the program instructions stored in the memory 930. At least one of the at least one memory may be included in the processor.

In this embodiment of this application, a specific connection medium between the communication interface 910, the processor 99, and the memory 930 is not limited. In this embodiment of this application, the memory 930, the communication interface 99, and the communication interface 910 are connected by using a bus 940 in FIG. 9a, and the bus is represented by a thick line in FIG. 9a. A connection manner between other components is schematically described, and is not limited. The bus may be classified into an address bus, a data bus, a control bus, or the like. For ease of representation, only one thick line is used to represent the bus in FIG. 9a, but this does not mean that there is only one bus or only one type of bus.

When the apparatus 90 is specifically an apparatus applied to a terminal device or a network device, for example, when the apparatus 90 is specifically a chip or a chip system, the communication interface 910 may output or receive a baseband signal. When the apparatus 90 is specifically a terminal device or a network device, the communication interface 910 may output or receive a radio frequency signal. In this embodiment of this application, the processor may be a general-purpose processor, a digital signal processor, an application-specific integrated circuit, a field programmable gate array, another programmable logic device, a discrete gate or a transistor logic device, or a discrete hardware assembly, and may implement or perform the methods, steps, and logical block diagrams disclosed in the embodiments of this application. The general-purpose processor may be a microprocessor, any conventional processor, or the like. The steps of the methods disclosed with reference to the embodiments of this application may be directly presented as being performed and completed by a hardware processor, or performed and completed by a combination of hardware and software modules in a processor.

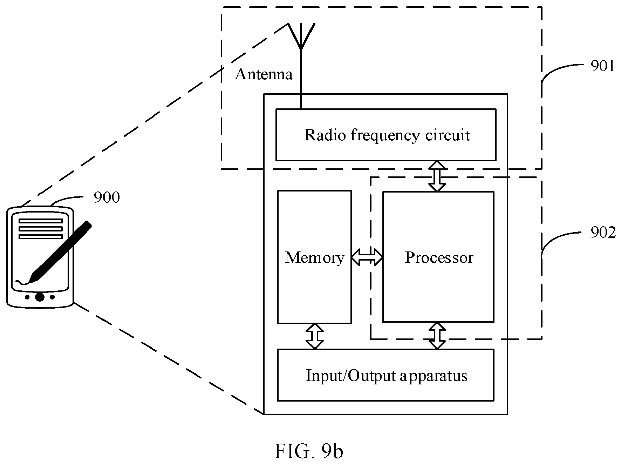

For example, FIG. 9b is a schematic structural diagram of another terminal device 900 according to an embodiment of this application. The terminal device may perform operations performed by the terminal device in the foregoing method embodiments.

For ease of description, FIG. 9b shows only main components of the terminal device. As shown in FIG. 9b, the terminal device 900 includes a processor, a memory, a radio frequency circuit, an antenna, and an input/output apparatus. The processor is mainly configured to: process a communication protocol and communication data, control the entire terminal device, execute a software program, and process data of the software program. For example, the processor is configured to support the terminal device in performing actions described in FIG. 2 or FIG. 4. The memory is mainly configured to store a software program and data. The radio frequency circuit is mainly configured to: perform conversion between a baseband signal and a radio frequency signal, and process the radio frequency signal. The antenna is mainly configured to receive and transmit the radio frequency signal in an electromagnetic wave form. The terminal device 900 may further include the input/output apparatus, such as a touchscreen, a display screen, or a keyboard, and is mainly configured to: receive data entered by a user, and output data to the user. It should be noted that some types of terminal devices may have no input/output apparatus.

After the terminal device is powered on, the processor may read a software program in a storage unit, explain and execute instructions of the software program, and process data of the software program. When data needs to be sent in a wireless manner, after performing baseband processing on the to-be-sent data, the processor outputs a baseband signal to a radio frequency circuit. After performing radio frequency processing on the baseband signal, the radio frequency circuit sends a radio frequency signal to the outside through the antenna in a form of electromagnetic wave. When data is sent to the terminal device, the radio frequency circuit receives the radio frequency signal by using the antenna, converts the radio frequency signal into a baseband signal, and outputs the baseband signal to the processor, and the processor converts the baseband signal into data and processes the data.

A person skilled in the art may understand that, for ease of description, FIG. 9b shows only one memory and one processor. In an actual terminal device, there may be a plurality of processors and memories. The memory may also be referred to as a storage medium, a storage device, or the like. This is not limited in the embodiments of this application.

In an optional implementation, the processor may include a baseband processor and a central processing unit (central processing unit, CPU). The baseband processor is mainly configured to process a communication protocol and communication data. The CPU is mainly configured to: control the entire terminal device, execute a software program, and process data of the software program. Optionally, the processor may alternatively be a network processor (network processor, NP), or a combination of a CPU and an NP. The processor may further include a hardware chip. The foregoing hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof. The memory may include a volatile memory (volatile memory), for example, a random-access memory (random-access memory, RAM). The memory may also include a non-volatile memory (non-volatile memory), for example, a flash memory (flash memory), a hard disk drive (hard disk drive, HDD), or a solid-state drive (solid-state drive, SSD). The memory may further include a combination of the foregoing types of memories.

For example, in this embodiment of this application, as shown in FIG. 9b, an antenna and a radio frequency circuit that have receiving and sending functions may be considered as a communication unit 901 of the terminal device 900, and a processor that has a processing function may be considered as a processing unit 902 of the terminal device 900.

The communication unit 901 may also be referred to as a transceiver, a transceiver machine, a transceiver apparatus, a transceiver unit, or the like, and is configured to implement a transceiver function. Optionally, a component for implementing a receiving function in the communication unit 901 may be considered as a receiving unit, and a component for implementing a sending function in the communication unit 901 may be considered as a sending unit. That is, the communication unit 901 includes a receiving unit and a sending unit. For example, the receiving unit may also be referred to as a receiver machine, a receiver, a receive circuit, or the like, and the sending unit may be referred to as a transmitter machine, a transmitter, a transmit circuit, or the like.

In some embodiments, the communication unit 901 and the processing unit 902 may be integrated into one device, or may be separated into different devices. In addition, the processor and the memory may be integrated into one device, or may be separated into different devices.

The communication unit 901 may be configured to perform receiving and sending operations of the terminal device in the foregoing method embodiments. The processing unit 902 may be configured to perform a data processing operation of the terminal device in the foregoing method embodiment.

An embodiment of the present invention further provides a computer-readable storage medium. The computer-readable storage medium stores instructions. When the instructions are run on a processor, the method procedures in the foregoing method embodiments are implemented.

An embodiment of the present invention further provides a computer program product. When the computer program product runs on a processor, the method procedures in the foregoing method embodiments are implemented.

It should be noted that, for brief description, the foregoing method embodiments are expressed as combinations of a series of actions. However, a person skilled in the art should know that the present invention is not limited to the described action sequence, because according to the present invention, some steps may be performed in another sequence or performed simultaneously. In addition, a person skilled in the art should also appreciate that all the embodiments described in the specification are preferred embodiments, and the related actions and modules are not necessarily mandatory to the present invention.

For descriptions of the embodiments provided in this application, reference may be made to each other, and the descriptions of the embodiments have respective focuses. For a part that is not described in detail in an embodiment, refer to related descriptions in other embodiments. For ease and brevity of description, for example, for functions and performed steps of the apparatuses and devices provided in the embodiments of this application, refer to related descriptions in the method embodiments of this application. Mutual reference, combination, or citing may also be made between the method embodiments and between the apparatus embodiments.

**Claims**

1. A method for determining a channel reception occasion performed by a terminal device, or a chip in a terminal device, wherein the method comprises:

   determining (201, 401) a first time domain resource offset value set, wherein the first time domain resource offset value set comprises a plurality of slot offset values between a physical sidelink feedback channel, PSFCH, and a physical uplink control channel, PUCCH, wherein the PSFCH carries acknowledgement information to feedback a successful or failed reception of a sidelink transmission, and the acknowledgement information is forwarded in the PUCCH to a network device; and
   determining (202, 402) at least one PSFCH reception occasion based on the first time domain resource offset value set and a feedback period of the PSFCH.

2. The method of claim 1, wherein the determining (202, 402) at least one PSFCH reception occasion based on the first time domain resource offset value set and a feedback period of the PSFCH comprises:
   determining, at least one time domain resource as a time domain resource in the at least one PSFCH reception occasion, wherein the at least one time domain resource is in a time domain resource set corresponding to the first time domain resource offset value set, and satisfies the feedback period of the PSFCH, and is for sidelink transmission.

3. The method of claim 1 or 2, wherein the method further comprises:
   generating (403) a hybrid automatic repeat request-acknowledgement, HARQ-ACK codebook based on the at least one PSFCH reception occasion, wherein a size of the HARQ-ACK codebook is related to a quantity of the at least one PSFCH reception occasion.

4. The method of claim 2 or 3, wherein the time domain resource set corresponding to the first time domain resource offset value set is a set obtained by subtracting each slot offset value in the first time domain resource offset value set from a PUCCH slot n.

5. The method of any one of claims 1 to 4, wherein the determining (201, 401) a first time domain resource offset value set comprises:
   determining the first time domain resource offset value set based on a configuration of the network device.

6. The method of claim 3, wherein a quantity of bits of HARQ-ACK information that needs to be fed back in each PSFCH reception occasion is related to one or more of the following parameters: a quantity of subchannels in a resource pool for sidelink transmission, the feedback period of the PSFCH, and a quantity of bits of HARQ-ACK information that needs to be fed back through each physical sidelink shared channel, PSSCH.

7. A communication apparatus, wherein the communication apparatus comprises:

   a processing unit (801), configured to determine a first time domain resource offset value set, wherein the first time domain resource offset value set comprises a plurality of slot offset values between a physical sidelink feedback channel, PSFCH and a physical uplink control channel, PUCCH, wherein the PSFCH carries acknowledgement information to feedback a successful or failed reception of a sidelink transmission, and the acknowledgement information is forwarded in the PUCCH to a network device, wherein
   the processing unit (801) is further configured to determine at least one PSFCH reception occasion based on the first time domain resource offset value set and a feedback period of the PSFCH.

8. The apparatus of claim 7, wherein that the processing unit (801) is configured to determine the at least one PSFCH reception occasion based on the first time domain resource offset value set and the feedback period of the PSFCH comprises:
   the processing unit (801) is configured to determine, at least one time domain resource as a time domain resource in the at least one PSFCH reception occasion, wherein the at least one time domain resource is in a time domain resource set corresponding to the first time domain resource offset value set, and satisfies the feedback period of the PSFCH, and is for sidelink transmission.

9. The apparatus of claim 7 or 8, wherein
the processing unit (801) is further configured to generate a hybrid automatic repeat request-acknowledgement, HARQ-ACK codebook based on the at least one PSFCH reception occasion, wherein a size of the HARQ-ACK codebook is related to a quantity of the at least one PSFCH reception occasion.

10. The apparatus of claim 8 or 9, wherein the time domain resource set corresponding to the first time domain resource offset value set is a set obtained by subtracting each slot offset value in the first time domain resource offset value set from a PUCCH slot n.

11. The apparatus of any one of claims 7 to 10, wherein that the processing unit (801) determines the first time domain resource offset value set comprises:
the processing unit (801) determines the first time domain resource offset value set based on a configuration of the network device.

12. The apparatus of claim 9, wherein a quantity of bits of HARQ-ACK information that needs to be fed back in each PSFCH reception occasion is related to one or more of the following parameters: a quantity of subchannels in a resource pool for sidelink transmission, the feedback period of the PSFCH, and a quantity of bits of HARQ-ACK information that needs to be fed back through each physical sidelink shared channel PSSCH.

13. A computer-readable storage medium, comprising a computer program or instructions, wherein when the computer program or the instructions are run, a computer is enabled to perform the method of any one of claims 1 to 6.

14. A computer program product, comprising a computer program or instructions, wherein when the computer program or the instructions are run on a computer, the computer is enabled to perform the method of any one of claims 1 to 6.

**Patentansprüche**

1. Verfahren zum Bestimmen einer Kanalempfangsgelegenheit, durchgeführt durch ein Endgerät oder einen Chip in einem Endgerät, wobei das Verfahren umfasst:

   Bestimmen (201, 401) eines ersten Zeitdomänenbetriebsmittel-Versatzwertsatzes, wobei der erste Zeitdomänenbetriebsmittel-Versatzwertsatz eine Vielzahl von "Slot"-Versatzwerten zwischen einem physikalischen "Sidelink"-Rückmeldungskanal, PSFCH, und einem physikalischen Aufwärtsstrecken-Steuerkanal, PUCCH, umfasst, wobei der PSFCH Bestätigungsinformationen trägt, um einen erfolgreichen oder fehlgeschlagenen Empfang einer "Sidelink"-Übertragung rückzumelden, und die Bestätigungsinformationen in dem PUCCH an ein Netzwerkgerät weitergeleitet werden; und
   Bestimmen (202, 402) mindestens einer PSFCH-Empfangsgelegenheit basierend auf dem ersten Zeitdomänenbetriebsmittel-Versatzwertsatz und einer Rückmeldungsperiode des PSFCH.

2. Verfahren nach Anspruch 1, wobei das Bestimmen (202, 402) mindestens einer PSFCH-Empfangsgelegenheit basierend auf dem ersten Zeitdomänenbetriebsmittel-Versatzwertsatz und einer Rückmeldungsperiode des PSFCH umfasst:
   Bestimmen mindestens eines Zeitdomänenbetriebsmittels als ein Zeitdomänenbetriebsmittel bei der mindestens einen PSFCH-Empfangsgelegenheit, wobei das mindestens eine Zeitdomänenbetriebsmittel in einem Zeitdomänenbetriebsmittelsatz korrespondierend mit dem ersten Zeitdomänenbetriebsmittel-Versatzwertsatz ist und die Rückmeldungsperiode des PSFCH erfüllt und für "Sidelink"-Übertragung dient.

3. Verfahren nach Anspruch 1 oder 2, wobei das Verfahren ferner umfasst:
   Erzeugen (403) eines Codebuchs für hybride automatische Wiederholungsanforderungsbestätigung, HARQ-ACK, basierend auf der mindestens einen PSFCH-Empfangsgelegenheit, wobei eine Größe des HARQ-ACK-Codebuchs zu einer Quantität der mindestens einen PSFCH-Empfangsgelegenheit in Beziehung steht.

4. Verfahren nach Anspruch 2 oder 3, wobei der Zeitdomänenbetriebsmittelsatz korrespondierend mit dem ersten Zeitdomänenbetriebsmittel-Versatzwertsatz ein Satz ist, der durch Subtrahieren jedes "Slot"-Versatzwerts in dem ersten Zeitdomänenbetriebsmittel-Versatzwertsatz von einem PUCCH-"Slot" n erhalten wird.

5. Verfahren nach einem der Ansprüche 1 bis 4, wobei das Bestimmen (201, 401) eines ersten Zeitdomänenbetriebsmittel-Versatzwertsatzes umfasst:
Bestimmen des ersten Zeitdomänenbetriebsmittel-Versatzwertsatzes basierend auf einer Konfiguration des Netzwerkgeräts.

6. Verfahren nach Anspruch 3, wobei eine Quantität von Bits von HARQ-ACK-Informationen, die bei jeder PSFCH-Empfangsgelegenheit rückgemeldet werden müssen, zu einem oder mehreren der folgenden Parameter in Beziehung steht: eine Quantität von Unterkanälen in einem Betriebsmittelbestand für "Sidelink"-Übertragung, die Rückmeldungsperiode des PSFCH und eine Quantität von Bits von HARQ-ACK-Informationen, die durch jeden physikalischen geteilten "Sidelink"-Kanal, PSSCH, rückgemeldet werden müssen.

7. Kommunikationsvorrichtung, wobei die Kommunikationsvorrichtung umfasst:

eine Verarbeitungseinheit (801), konfiguriert zum Bestimmen eines ersten Zeitdomänenbetriebsmittel-Versatzwertsatzes, wobei der erste Zeitdomänenbetriebsmittel-Versatzwertsatz eine Vielzahl von "Slot"-Versatzwerten zwischen einem physikalischen "Sidelink"-Rückmeldungskanal, PSFCH, und einem physikalischen Aufwärtsstrecken-Steuerkanal, PUCCH, umfasst, wobei der PSFCH Bestätigungsinformationen trägt, um einen erfolgreichen oder fehlgeschlagenen Empfang einer "Sidelink"-Übertragung rückzumelden, und die Bestätigungsinformationen in dem PUCCH an ein Netzwerkgerät weitergeleitet werden, wobei
die Verarbeitungseinheit (801) ferner konfiguriert ist zum Bestimmen mindestens einer PSFCH-Empfangsgelegenheit basierend auf dem ersten Zeitdomänenbetriebsmittel-Versatzwertsatz und einer Rückmeldungsperiode des PSFCH.

8. Vorrichtung nach Anspruch 7, wobei, dass die Verarbeitungseinheit (801) konfiguriert ist zum Bestimmen der mindestens einen PSFCH-Empfangsgelegenheit basierend auf dem ersten Zeitdomänenbetriebsmittel-Versatzwertsatz und der Rückmeldungsperiode des PSFCH, umfasst:
die Verarbeitungseinheit (801) ist konfiguriert zum Bestimmen mindestens eines Zeitdomänenbetriebsmittels als ein Zeitdomänenbetriebsmittel bei der mindestens einen PSFCH-Empfangsgelegenheit, wobei das mindestens eine Zeitdomänenbetriebsmittel in einem Zeitdomänenbetriebsmittelsatz korrespondierend mit dem ersten Zeitdomänenbetriebsmittel-Versatzwertsatz ist und die Rückmeldungsperiode des PSFCH erfüllt und für "Sidelink"-Übertragung dient.

9. Vorrichtung nach Anspruch 7 oder 8, wobei
die Verarbeitungseinheit (801) ferner konfiguriert ist zum Erzeugen eines Codebuchs für hybride automatische Wiederholungsanforderungsbestätigung, HARQ-ACK, basierend auf der mindestens einen PSFCH-Empfangsgelegenheit, wobei eine Größe des HARQ-ACK-Codebuchs zu einer Quantität der mindestens einen PSFCH-Empfangsgelegenheit in Beziehung steht.

10. Vorrichtung nach Anspruch 8 oder 9, wobei der Zeitdomänenbetriebsmittelsatz korrespondierend mit dem ersten Zeitdomänenbetriebsmittel-Versatzwertsatz ein Satz ist, der durch Subtrahieren jedes "Slot"-Versatzwerts in dem ersten Zeitdomänenbetriebsmittel-Versatzwertsatz von einem PUCCH-"Slot" n erhalten wird.

11. Vorrichtung nach einem der Ansprüche 7 bis 10, wobei, dass die Verarbeitungseinheit (801) den ersten Zeitdomänenbetriebsmittel-Versatzwertsatz bestimmt, umfasst:
die Verarbeitungseinheit (801) bestimmt den ersten Zeitdomänenbetriebsmittel-Versatzwertsatz basierend auf einer Konfiguration des Netzwerkgeräts.

12. Vorrichtung nach Anspruch 9, wobei eine Quantität von Bits von HARQ-ACK-Informationen, die bei jeder PSFCH-Empfangsgelegenheit rückgemeldet werden müssen, zu einem oder mehreren der folgenden Parameter in Beziehung steht: eine Quantität von Unterkanälen in einem Betriebsmittelbestand für "Sidelink"-Übertragung, die Rückmeldungsperiode des PSFCH und eine Quantität von Bits von HARQ-ACK-Informationen, die durch jeden physikalischen geteilten "Sidelink"-Kanal, PSSCH, rückgemeldet werden müssen.

13. Computerlesbares Speichermedium, umfassend ein Computerprogramm oder Anweisungen, wobei, wenn das Computerprogramm oder die Anweisungen ausgeführt werden, ein Computer in die Lage versetzt wird, das Verfahren nach einem der Ansprüche 1 bis 6 durchzuführen.

14. Computerprogrammprodukt, umfassend ein Computerprogramm oder Anweisungen, wobei, wenn das Computerprogramm oder die Anweisungen auf einem Computer ausgeführt werden, der Computer in die Lage versetzt wird, das Verfahren nach einem der Ansprüche 1 bis 6 durchzuführen.

## Revendications

1. Procédé de détermination d'une occasion de réception de canal réalisée par un dispositif terminal, ou une puce dans un dispositif terminal, le procédé comprenant :

   la détermination (201, 401) d'un premier ensemble de valeurs de décalage de ressources de domaine temporel, dans lequel le premier ensemble de valeurs de décalage de ressources de domaine temporel comprend une pluralité de valeurs de décalage de tranches de temps entre un canal physique de retour d'informations de liaison latérale, PSFCH, et un canal physique de commande de liaison montante, PUCCH, dans lequel le PSFCH convoie des informations d'accusé de réception pour rapporter une réception réussie ou défaillante d'une transmission de liaison latérale, et les informations d'accusé de réception sont relayées dans le PUCCH vers un dispositif de réseau ; et
   la détermination (202, 402) d'au moins une occasion de réception de PSFCH sur la base du premier ensemble de valeurs de décalage de ressources de domaine temporel et d'une période de retour d'informations du PSFCH.

2. Procédé selon la revendication 1, dans lequel la détermination (202, 402) d'au moins une occasion de réception de PSFCH sur la base du premier ensemble de valeurs de décalage de ressources de domaine temporel et d'une période de retour d'informations du PSFCH comprend :
   la détermination d'au moins une ressource de domaine temporel comme ressource de domaine temporel dans l'au moins une occasion de réception de PSFCH, dans lequel l'au moins une ressource de domaine temporel appartient à un ensemble de ressources de domaine temporel correspondant au premier ensemble de valeurs de décalage de ressources de domaine temporel, et satisfait la période de retour d'informations du PSFCH, et sert à une transmission de liaison latérale.

3. Procédé selon la revendication 1 ou 2, le procédé comprenant en outre :
   la génération (403) d'un livre de codes de demande de répétition hybride automatique-accusé de réception, HARQ-ACK, sur la base de l'au moins une occasion de réception de PSFCH, dans lequel la taille du livre de codes HARQ-ACK est liée à une quantité de l'au moins une occasion de réception de PSFCH.

4. Procédé selon la revendication 2 ou 3, dans lequel l'ensemble de ressources de domaine temporel correspondant au premier ensemble de valeurs de décalage de ressources de domaine temporel est un ensemble obtenu en soustrayant chaque valeur de décalage de tranche de temps dans le premier ensemble de valeurs de ressources de domaine temporel d'une tranche de temps de PUCCH n.

5. Procédé selon l'une quelconque des revendications 1 à 4, dans lequel la détermination (201, 401) d'un premier ensemble de valeurs de décalage de ressources de domaine temporel comprend :
   la détermination du premier ensemble de valeurs de décalage de ressources de domaine temporel sur la base d'une configuration du dispositif de réseau.

6. Procédé selon la revendication 3, dans lequel une quantité de bits d'informations de HARQ-ACK à renvoyer dans chaque occasion de réception PSFCH est liée à un ou plusieurs des paramètres suivants : une quantité de sous-canaux dans un pool de ressources pour une transmission de liaison latérale, la période de retour d'informations du PSFCH, et une quantité de bits d'information de HARQ-ACK à renvoyer par le biais de chaque canal physique partagé de liaison latérale, PSSCH.

7. Appareil de communication, l'appareil de communication comprenant :

   une unité de traitement (801), configurée pour déterminer un premier ensemble de valeurs de décalage de ressources de domaine temporel, dans lequel le premier ensemble de valeurs de décalage de ressources de domaine temporel comprend une pluralité de valeurs de décalage de tranches de temps entre un canal physique de retour d'informations de liaison latérale, PSFCH, et un canal physique de commande de liaison montante, PUCCH, dans lequel le PSFCH convoie des informations d'accusé de réception pour rapporter une réception réussie ou défaillante d'une transmission de liaison latérale, et les informations d'accusé de réception sont relayées dans le PUCCH à un dispositif réseau, dans lequel

l'unité de traitement (801) est configurée en outre pour déterminer au moins une occasion de réception de PSFCH sur la base du premier ensemble de valeurs de décalage de ressources de domaine temporel et d'une période de retour d'informations du PSFCH.

8. Appareil selon la revendication 7, dans lequel le fait que l'unité de traitement (801) est configurée pour déterminer l'au moins une occasion de réception de PSFCH sur la base du premier ensemble de valeurs de décalage de ressources de domaine temporel et de la période de retour d'informations du PSFCH comprend :

l'unité de traitement (801) est configurée pour déterminer au moins une ressource de domaine temporel comme ressource de domaine temporel dans l'au moins une occasion de réception de PSFCH, dans lequel l'au moins une ressource de domaine temporel appartient à un ensemble de ressources de domaine temporel correspondant au premier ensemble de valeurs de décalage de domaine temporel, et satisfait la période de retour d'informations du PSFCH, et sert à une transmission de liaison latérale.

9. Appareil selon la revendication 7 ou 8, dans lequel

l'unité de traitement (801) est configurée en outre pour générer un livre de codes de demande de répétition hybride automatique-accusé de réception, HARQ-ACK, sur la base de l'au moins une occasion de réception de PSFCH, dans lequel une taille du livre de codes HARQ-ACK est liée à une quantité de l'au moins une occasion de réception de PSFCH.

10. Appareil selon la revendication 8 ou 9, dans lequel l'ensemble de ressources de domaine temporel correspondant au premier ensemble de valeurs de décalage de ressources de domaine temporel est un ensemble obtenu en soustrayant chaque valeur de décalage de tranche de temps dans le premier ensemble de valeurs de décalage de ressources de domaine temporel d'une tranche de temps de PUCCH n.

11. Appareil selon l'une quelconque des revendications 7 à 10, dans lequel la détermination par l'unité de traitement (801) du premier ensemble de valeurs de décalage de ressources de domaine temporel comprend :

l'unité de traitement (801) détermine le premier ensemble de valeurs de décalage de ressources de domaine temporel sur la base d'une configuration du dispositif de réseau.

12. Appareil selon la revendication 9, dans lequel une quantité de bits d'information de HARQ-ACK à renvoyer dans chaque occasion de réception de PSFCH est liée à un ou plusieurs des paramètres suivants : une quantité de sous-canaux dans un pool de ressources pour une transmission de liaison latérale, la période de retour d'informations du PSFCH, et une quantité de bits d'information de HARQ-ACK à renvoyer par le biais de chaque canal physique partagé de liaison latérale, PSSCH.

13. Support de stockage lisible par ordinateur, comprenant un programme d'ordinateur ou des instructions, dans lequel, une fois le programme d'ordinateur ou les instructions exécuté(es), un ordinateur est en mesure de réaliser le procédé selon l'une quelconque des revendications 1 à 6.

14. Produit-programme d'ordinateur, comprenant un programme d'ordinateur ou des instructions, dans lequel, une fois le programme d'ordinateur ou les instructions exécuté(es) sur un ordinateur, l'ordinateur est en mesure de réaliser le procédé selon l'une quelconque des revendications 1 à 6.

Network device

First terminal device

Sidelink

Second terminal device

FIG. 1

A first terminal device determines a first time domain resource offset value set, where the first time domain resource offset value set includes one or more time domain resource offset values between a physical side link feedback channel PSFCH and a physical uplink control channel PUCCH

201

The first terminal device determines a PSFCH reception occasion based on the first time domain resource offset value set and a feedback period of the PSFCH

202

FIG. 2

| Carrier slot | 0 | 1 | 2 | 3 | 4 | 5 | 6 | 7 | 8 | 9 | 0 | 1 | 2 | 3 | 4 | 5 |
|---|---|---|---|---|---|---|---|---|---|---|---|---|---|---|---|---|
| | D | D | D | F | U | U | D | D | D | D | D | D | D | F | U | U |

| Resource pool slot | | 0 | 1 | | 2 | 3 |
|---|---|---|---|---|---|---|
| | | S | S | | S | S |

FIG. 3

A first terminal device determines a first time domain resource offset value set, where the first time domain resource offset value set includes one or more time domain resource offset values between a physical side link feedback channel PSFCH and a physical uplink control channel PUCCH    401

The first terminal device determines a PSFCH reception occasion based on the first time domain resource offset value set and a feedback period of the PSFCH    402

The first terminal device generates a hybrid automatic repeat request-acknowledgement HARQ-ACK codebook based on the PSFCH reception occasion    403

FIG. 4

|  | 0 | 1 | 2 | 3 | 4 | 5 |
|---|---|---|---|---|---|---|
| Subchannel 10 | PSSCH 1 | PSSCH 3 | | PSSCH 6 | | |
| Subchannel 11 | PSSCH 2 | | PSSCH 5 | | | |
| Subchannel 12 | | PSSCH 4 | | PSSCH 7 | | |

N=4, K=2

PSFCH reception occasion

FIG. 5

EP 4 106 244 B1

|  | 0 | 1 | 2 | 3 | 4 | 5 |
|---|---|---|---|---|---|---|
| Subchannel 10 | PSSCH 1 | PSSCH 3 | | PSSCH 6 | | |
| Subchannel 11 | PSSCH 2 | | PSSCH 5 | | | |
| Subchannel 12 | | PSSCH 4 | | PSSCH 7 | | |

N=1, K=2

PSFCH reception occasion 1    PSFCH reception occasion 2    PSFCH reception occasion 3    PSFCH reception occasion 4

FIG. 6

FIG. 7

Select HARQ-ACK information on the PSFCH 5 from the PSFCH 3 to the PSFCH 5 and report the information on the PUCCH

FIG. 8

FIG. 9a

FIG. 9b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NTT DOCOMO et al.** Sidelink resource allocation mechanism mode 1 for NR V2X. *3GPP DRAFT; R1-1912881*, 09 November 2019, vol. RAN WG1 (Reno)

- **ERICSSON**. Feature lead summary#3 on Resource allocation for NR sidelink Mode 1. *3GPP DRAFT; R1-1911713*, 14 October 2019, vol. RAN WG1 (Chongqing)